# EUROPEAN PATENT APPLICATION

(11) **EP 2 166 504 A1**
(43) Date of publication of application: **24.03.2010**
(21) Application number: 09167954.8
(22) Date of filing: 15.08.2009
(51) Int. Cl.: G06Q 30/00

(54) **Method and device for automated processing of goods data**

(30) Priority: 18.09.2008 DE 102008042193; 18.09.2008 US 98020
(71) Applicant: Speed4trade GmbH, 92655 Grafenwöhr (DE)
(72) Inventor: Kunz, Sandro, 92708 Mantel (DE)
(74) Representative: Lang, Christian

(57) **Abstract**

The present invention relates to a method or a device for automated processing of goods data (2, 3) for sales purposes as well as for automated processing of goods data for the manufacture of printed goods presentations (8), in which data for online publications and/or online sales offers and/or data for an ERP system are used simultaneously for the purpose of creating printed goods presentations in the form of catalogues, brochures, advertising flyers and the like.

## Description

### BACKGROUND OF THE INVENTION

### FIELD OF THE INVENTION

The present invention relates to a method for automated processing of goods data for sales purposes or for the manufacture of printed goods presentations in the form of catalogues, brochures and the like and corresponding devices for this.

### PRIOR ART

So-called internet trading, i.e., trading in which goods can be offered over the internet and acquired over the internet by a buyer via corresponding communications, is growing steadily. In addition to a plurality of so-called online shops, which offer their goods via internet pages and ship the goods to the customers after it has been ordered, other internet-specific sales forms, such as internet auctions and the like, have become established. Accordingly, there are so-called internet portals or general internet pages on which pricing information and sets of goods are published that enable the user to gain a simple overview of the range of goods and to make their selection directly. Generally, these can be regarded as internet marketplaces in which all kinds of distribution of goods and services can be effected via the worldwide computer network that is the internet.

To operate an online shop or to post offerings for sale in an internet auction, it is necessary to create digital photos of the item for sale, and to compile and upload a description of the offerings to an appropriate server on the internet or computer network in general, such that the offerings are visible to users on the relevant pages in the network. Furthermore, it is necessary to monitor whether certain order processes, for example via e-mail and the like, are received in order that processing of the order can be initiated. In addition, payments must be processed and, especially, receipt of payment monitored, in order, for example, that the shipping process for the goods in question may be initiated on receipt of payment. This is very time consuming and not lucrative for products with low profit margins. For this reason, technical solutions to automate the bulk of these operations have been created. One such technical solution is the method underpinning the "Speed4Trade" (Trademark) software program, said solution facilitating the posting of sales items in different internet distribution channels and automates the entire sales process.

The sales system does this by using data stored in an ERP (enterprise resource planning system) system for managing inventory. This greatly reduces the effort required for entering the data needed for preparing the sales offer, as much of the required data is already in the ERP system. Overall, the Speed4Trade solution can make for a time- and cost-efficient internet trading operation, since the work processes for posting a plurality of sales offers to all kinds of internet sales channels are largely automated. As a result, it is especially also possible to successfully sell goods with a low profit margin over the internet.

Although this in itself yields very great labour and cost savings and thus constitutes a high degree of automation, there is a further need to further increase the efficiency of such sales processes and sales channels and to attain a high degree of automation and extensive functional integration into automated methods and equipment overall.

### DISCLOSURE OF THE INVENTION

### OBJECT OF THE INVENTION

It is therefore the object of the present invention to present a technical solution for further increasing the degree of automation and efficiency of sales processes. Especially, a convenient and user-friendly technical sales tool shall be provided for the user.

### TECHNICAL SOLUTION

This object is achieved by a method having the features of claims 1 to 8 and a device having the features of claims 25 and 33 as well as a database having the features of claim 48 and a software product having the features of claims 51 and 52. Advantageous embodiments are the object of the dependent claims.

The invention is characterized by the fact that further automation is possible to the extent that the existing data from an ERP system and/or existing data for an online publication or posting of an online sales offer to a computer network can be used to automatically create printed goods presentations, such as catalogues, brochures and the like, without the need for additional time-consuming and labour-intensive collation of the data to be published, such as images, text, descriptions and the like. Instead, the existing data from the ERP system and/or internet trading are used and these existing data are processed in an automated method to yield a print template for a printed goods presentation. Thus, the user is given a technical tool with which, by simply selecting certain goods or goods groups and corresponding setting variables for the printed goods presentation, he can create a printed goods presentation efficiently that, in addition to internet sales offers and online publications, he can distribute and/or can send to selected customers. This also creates the possibility of customized advertising with printed publications, which can be targeted at certain groups of customers, for example in terms of language, place of residence, buying habits, or tailored to certain sales offers, for example, in one or more selected online sales channels and the like.

The invention is therefore characterized from a first aspect in that, in a method for automated processing of goods data for sales purposes, a database of goods data is provided which comprises goods information for managing inventory and/or data for describing the goods. The database can therefore use either only pre-existing data from an ERP system, for example, on sales prices, dimensions, weight and the like, to create the print template or, alternatively or additionally, further data for describing the goods, said data already being held in a database for online shops or internet platforms. Alternatively, it is naturally also conceivable for additional data for describing the goods to be collected in a database.

Furthermore, the invention provides a processing module, which prepares the goods data for publication, said processing module collaborating with a database or a storage memory of layout information, such that a print template for a printed goods presentation is generated automatically from the goods data at the request of the user. Such a method is implemented preferably programmatically by means of a data processing system which has access to a database of goods data. The database of goods data can, in this connection, also be stored in the data processing system directly or remotely on a corresponding server or central computer, in which case suitable communication means for establishing a data connection are provided. The same applies to the databases of layout information, the purpose of which is to enable incorporation the goods data into a print template for a printed goods presentation.

The database of goods data, as has already been mentioned, can comprise goods information for inventory management, of the kind stored in an ERP system, and additionally those data for describing the goods which have been compiled specifically for marketing purposes, such as image files, descriptive texts in one or more languages, technical data, etc. The corresponding data, such as the goods data for the inventory management, can be transferred from existing databases and databases already used by other systems or be incorporated by reference into the corresponding databases of goods data. Thus, existing structures of an ERP system which comprise data for handling goods data in a commercial company, and/or data for on-line distribution, can be used in connection with this invention.

Consequently, the database of goods data can comprise a self-contained database of uniform data structure, or several sub-databases, which are interlinked and collaborate with each other.

Accordingly, the processing module can either merely prepare data from an ERP system for publication for a printed goods presentation in the form of a print template or additionally use created or existing data for describing the goods to create a print template for a printed presentation.

It is preferable, however, for the processing module additionally to use the existing goods data, i.e., goods information and data for describing the goods, to additionally generate online sales offers, internet presentations and the like or to employ the data existing for these intended uses for printed publications as well.

According to a second aspect of the present invention, for which protection is sought separately and independently of the other aspects of the invention, and in combination therewith, a method or a device is claimed for the manufacture of printed goods presentations in the form of catalogues, brochures and the like in which layout information for the design of the printed goods presentation is provided and wherein, by means of a processing module, a print template for the printed goods presentation is generated automatically in accordance with the layout information, wherein the goods data are taken from a database used for creating online publications, such that the data already used for the goods presentation in online shops and internet auctions and the like can additionally be used for printed goods presentations in the form of catalogues, brochures and the like, wherein the generation of the printed goods presentation or the corresponding print template is largely automated. This brings a significant gain in efficiency, since the previous approach to printed publications entailed a considerable outlay for collating the goods data, designing the goods presentation and generating a corresponding print template. Additionally, duplicate work was often performed that the inventive method can eliminate. Thus the user is provided with a technical tool which, owing to the high level of integrated automation, enables efficient use to be made of data.

An inventive device therefore has a corresponding data-processing system with a database or a storage memory of layout information for the design of the printed goods presentation as well as a processing module implemented in the data processing system in the form of software, said processing system configured such that the goods to be presented in the printed goods presentation are automatically collated in a print template, wherein the processing module has an interface for extracting the goods data from a database of goods data used for generating online publications. The database of goods data can be stored in the same data-processing system or in a different data-processing system, such as a central server and the like, such that the interface in certain circumstances comprises corresponding communication means for data exchange.

The database of goods data may in turn merely comprise data for describing the goods for the online publication or additionally goods information from an ERP system. Accordingly, several sub-databases interconnected can be provided, or a self-contained database with a self-contained data structure may exist.

The layout information can in turn be stored in a database, which is stored separately or together with the database of goods data or wherein the database of layout information is integrated into the database of goods data.

The database of layout information can contain all kinds of information for designing the printed goods presentation, such as information about the text size, text position, image size, image position, font, font colour, background colour, frame layout, page size, number of pages and pagination, etc.

In line with the layout information, the processing module can provide a layout framework which is then automatically populated with the corresponding goods data from the database.

The processing module can furthermore provide an input unit which enables a user to select the goods or groups of goods for inclusion in the printed goods presentation or to decide when or in what cycles the printed goods presentation should be created automatically and/or which layout should be used.

It is also possible to specify which groups of customers, for example, customers in a particular country, customers with particular interests, customers with specific shopping behaviour, etc., should be offered customized and appropriately modified printed goods presentations. In this connection, customization can range from being very extensive to including just a few or even individual printed goods presentations. Moreover, it is also possible to generate goods-related printed material, for example, thematic presentations or printed products tailored to the special offerings of a sales channel. With these few items of information or selection for determining the printed goods presentation, the laborious and complex process of producing a printed goods presentation can be performed fully automatically, such that all steps from the provision of corresponding images and descriptive texts through to integration of this information into corresponding print templates can all proceed automatically.

In a data-processing device, such as a PC and the like, the data-processing module can collaborate with input devices, such as keyboards and the like, for the purpose of realising an input unit.

Depending on how much information is available to the system as a whole, various measures can be taken. For example, where sales information, such as information about items purchased by a user, as well as customer address information and the like are available, it is possible, on the basis of the items sold and the interests of the customer, to include tailored goods offers in a printed goods presentation and to send them specifically to the customer. For example, it is possible to log the other products bought by purchasers of a certain product, such that corresponding goods groups can be formed, which can then also be included in a corresponding printed goods presentation.

Especially, in this connection, highly customized print templates, ultimately tailored to the individual addressee of the printed goods presentation, can be created because modern digital printing technology makes it possible to produce printed material cost-efficiently, even in the smallest print runs.

To this end, the print template can be provided as a data file, for example in the widely used PDF (portable document format) format, that can be processed by the printing device.

The level of automation can extend as far as the processing module's sending the produced print template automatically to a printing device, which can be located either in the vicinity of the data-processing system or to which the print data are supplied via a remote data connection. As a result, without further action by the user, the printing process can be automatically started direct, there being an additional possibility of, for example, shipping the printed goods presentation to the addressee immediately after printing in the event that the address information is printed.

In addition, it is naturally also possible for the print template, such as a PDF file, to be sent direct to corresponding addressees via e-mail, such that the addressees themselves can print out the printed goods presentation. Such a file can in turn contain corresponding hyperlinks to the online shops, such that, after the user has read the printed information, for example, he can very simply order the selected goods online by using the hyperlinks contained in the file to immediately gain access to the corresponding internet offering.

### BRIEF DESCRIPTION OF THE FIGURES

Further advantages, characteristics and features of the present invention are apparent from the following detailed description of embodiments using the enclosed drawings.

The drawings show in purely schematic form in
- Figure 1: a schematic diagram of the inventive system for the automated processing of goods data for sales purposes and for the production of printed goods presentations in the form of catalogues, brochures and the like;
- Figure 2: an illustration of a database structure and the relationship between the information in the database and the printed goods presentation;
- Figure 3: a schematic diagram of the collaboration between the various devices involved in the inventive system for the automated processing of goods data for sales purposes and for the production of printed goods presentations in the form of catalogues, brochures and the like; and in
- Figure 4: a description of how the processing module functions.

### EMBODIMENTS

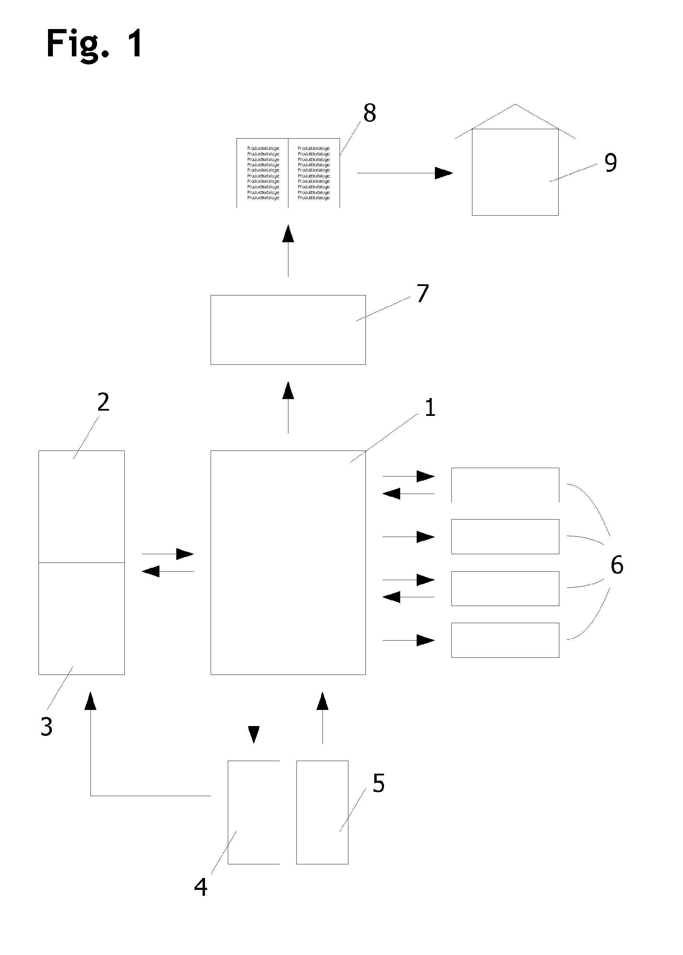

Figure 1 shows a schematic diagram of a system for automated processing of goods data for sales purposes or for manufacturing printed goods presentations in the form of catalogues, brochures and the like in accordance with the present invention, wherein the system comprises the corresponding inventive devices, databases and software products and works in accordance with the inventive method.

Figure 1 shows a processing module 1 as central component of the inventive system in accordance with the inventive method or device, which can be formed as a software product for execution on a data-processing device. The processing module 1 collaborates with a database 2, 3, which, for the present embodiment in Fig. 1, is shown in two parts. However, the database 2, 3, can also have a self-contained database structure and thus be viewed as one part.

The database 2, 3 comprises a sub-database 2 of goods information for the purpose of inventory management of the kind used in a well-known ERP system. Such an ERP system comprises, for example, data on a plurality of different goods A1, A2, A3 ... AN, which are stored in the database of the ERP system. The goods information comprises, for example, goods numbers, information about the amount of goods in stock, the storage location, the purchase price, the sales price, the dimensions, the weight, etc. Altogether, the database 2 of the ERP system stores all the information needed for trading in the corresponding goods and handling the goods, i.e. shipping and the like. Such ERP systems generally find widespread use not just in the retail trade but also in production plants or in industry as they facilitate material flow and logistics, as well as enterprise planning.

In accordance with the present invention, a further sub-database 3 of marketing information or data for describing the goods is provided, in which data on the individual items of goods are stored that can be used for descriptions in a sales brochure and the like. Accordingly, the sub-database part 3 can comprise data for describing the goods, such as image data on the different products, text data, etc.

As shown in the embodiment of Figure 1, the sub-database 3 is provided as an additional separate database in addition to the database 2 of the ERP system. Accordingly in this design, there are two independent databases, which the processing module 1 can access for the purpose of retrieving the required information.

Alternatively, simply one database into which the sub-databases 2 and 3 are integrated may be provided. Such a consistent, central database of goods data can also be generated in a simple manner by exporting an already existing database for an existing ERP system and/or a database of data for describing the goods into the database of goods data.

The data for describing the goods, which are contained in the multi-part database of goods data or in the one-part, integrated database of goods data, are processed by the processing module 1, such that they can be automatically posted to corresponding online shops, internet auction platforms, general internet platforms, internet browsers and the like for the purpose of posting the sales offer. The corresponding on-line internet offerings 6 can, in this regard, be of a varied and diverse nature and, especially, several of these on-line internet publications 6 can be realized by the processing module 1.

The posting of a corresponding goods offer to online internet shops, internet platforms and the like 6 is done automatically by the processing module, such that the bulk or all workflows for posting the offering or publication/promotion are performed automatically, such that the user of the corresponding system does not have to execute or instigate the working steps individually by hand, but rather the entire workflow or at least large parts thereof are performed independently of user input.

The user need only make a selection as to which goods are to be posted in which on-line publications via an input unit (not shown) of the processing module 1. But here, too, the processing module 1 affords a high degree of automation, more precisely to the extent that, in accordance with certain specifications, such as time constraints, it is possible to post new offerings automatically. It is also possible where certain goods are being sold off in individual online shops or auction platforms to post new offerings related to the sold-off goods. This can be fully automated.

Accordingly, at least partly in the case of certain online offerings, not only can information about goods offers be uploaded to the corresponding internet platform or online shop, but sales information or orders can also be read out, as indicated by the double arrows between the processing module 1 and the online offerings 6 .

Accordingly, the processing module 1, in line with a received order, can issue a command for the shipment of ordered goods to a delivery module 4, for example a computer providing corresponding work instructions for shipping employees. Additionally, a payment module can be used to determine whether corresponding payments have been received in order that corresponding shipping processes may be triggered only after receipt of payment. Similarly, data can be exchanged with the database 2, 3 directly via the processing module 1 or via the shipping module 4 in order that the ERP system may be kept up to date. For example, when goods are sold, the number of goods in stock needs to be adjusted accordingly.

In accordance with the invention, however, the processing module 1 uses the data for describing the goods that are already in the database 2, 3 not only for automated posting of offerings or promotional information to the internet, but also permits a print template for a printed goods presentation to be generated automatically. This is shown in Fig. 1 by the arrow between the processing module 1 and a printing device 7. This is accompanied by a major simplification of workflows in a company, since for the first time an integrated solution for managing goods in an ERP exists which facilitates the simultaneous use of the data from the ERP system, possibly supported by additional descriptive data, for online marketing and marketing with printed publications. It is therefore no longer necessary to perform separate data logging for marketing campaigns with printed publications, but rather resort can simply be made to the data already in the ERP system and for the on-line publication.

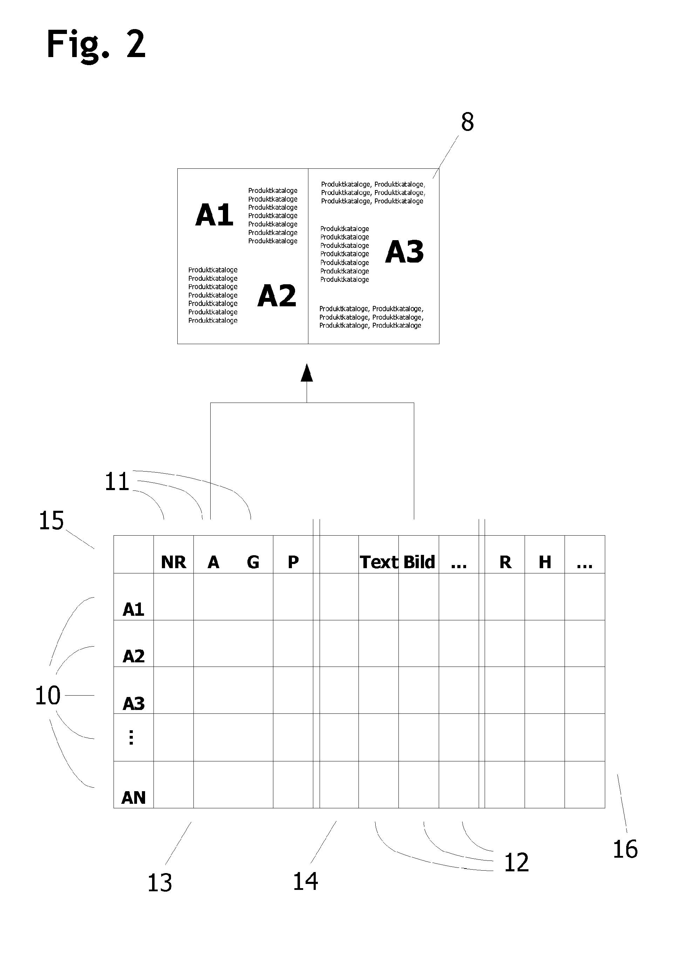

Figure 2 is a purely schematic illustration of a possible structure of a database 15 that can be used for the database 2, 3 of the embodiment of Figure 1.

The database 15 has a plurality of data fields, which in accordance with Figure 2, are divided into a plurality of rows 10 and columns 11, 12.

The rows 10 contain the data for the individual items of goods A1, A2, A3 ... AN, while the columns 11, 12 define the type of data stored in the corresponding fields. For example, a sequential goods number may be provided in the first column, the number of items of goods in stock in the next columns, and then information on weight, price and the like. These data, which are stored in the columns 11 for goods A1 to AN, correspond, for example, to the goods information for managing inventory in an ERP system. Similarly, that section of the database containing columns 11 which is marked by the double line separating columns 11 and 12 is viewed as the ERP section 13 of the database 15. Columns 12 of the database 15 can store data for describing the goods, such as texts, images and the like, such that this section of the database 15 can be described as the goods description section 14.

The corresponding information for inclusion in the printed goods presentation 8, such as dimensions A, price P, images, descriptive texts, are then retrieved from the database 15 and collated, in accordance with layout information, such as background colours, frame layouts R, etc., to yield a corresponding print template for a printed presentation 8.

As shown in Fig. 2, the layout information in the database can be provided in a corresponding layout information section 16.

A corresponding print template for a printed presentation 8 can, in accordance with the illustration of Fig. 1, be transmitted to a printing device 7, which processes the print template directly to a printed goods presentation 8.

Since the database 2, 3 or 15 can additionally contain address information about the addressees of the printed presentation 8, the printed presentation 8 can be sent direct to the addressees 9, since, for example, the corresponding address data can already be printed direct on the printed goods presentation 8.

The database 2, 3 or 15 can also contain a wide range of information that can be used for marketing or sales purposes. Thus, the database can contain information about goods combinations that, for example, have already been bought by customers or are thematically related. Similarly, thematically related printed goods presentations can easily be created, because corresponding information in the database facilitates easy data selection. Overall, it is thus possible to create wholly customized printed goods presentations, which, depending on the addressee, include only those goods which are related to goods already sold to the addressee. In this way, the effectiveness of a printed goods presentation can be markedly increased, as there is a greater probability that the printed goods presentation includes only goods which are of benefit or interest to the addressee. Customized printing of individual copies is possible without much effort, on account of digital printing, with the data files serving as print template.

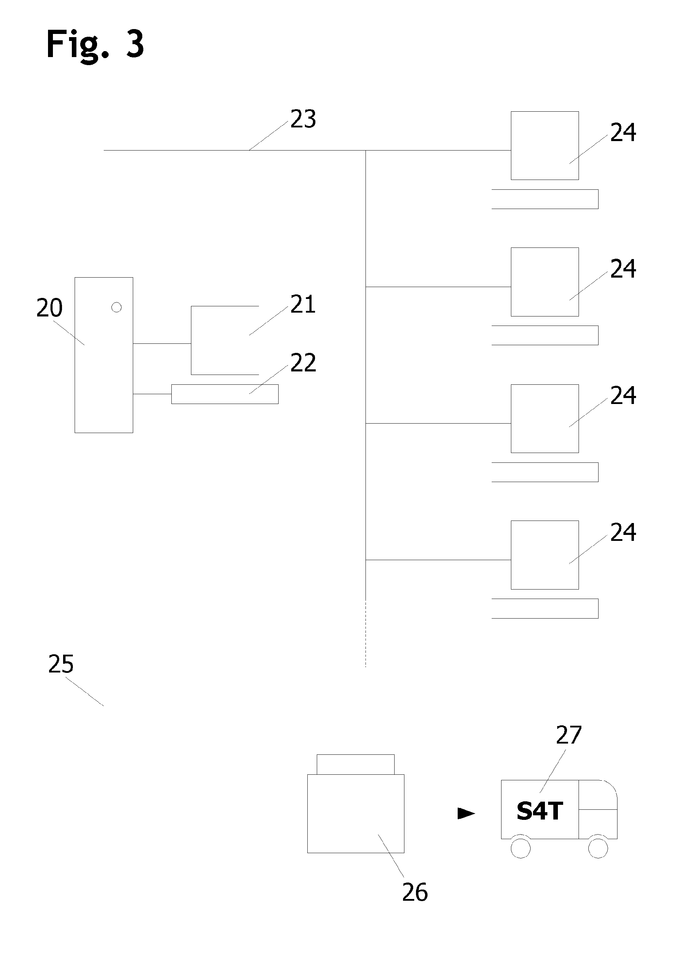

Figure 3 shows collaboration among the various devices of a corresponding inventive system, which operates according to the inventive method.

Figure 3 shows a data-processing system 20, such as a personal computer or PC. The data-processing system 20 has input devices 23, such as a keyboard, and output devices 21, such as a display 21.

The software product whose command sequences facilitate execution of the inventive method during implementation is stored in corresponding memory means inside the data-processing system 20. Connected to the data processing system 20 via a data connection 25 in the form of a line or a wireless connection is a printing device 26, which processes the print template in the form of a data file created by the data-processing system 20. The corresponding printed goods presentations can be distributed direct from the printing device 26 to the relevant addressees by means of delivery services 27.

The data processing system 20 is furthermore connected to a plurality of network stations 24 via communication lines 23, such as are connected together in a network via the internet. The online publications or online offerings generated by the processing module or the data-processing system 20 are uploaded to the server via the communication lines 23, where they can be seen and availed of by all internet users. The orders can then be sent back to the data-processing system 20 direct via the network stations 24 or servers of the various online shops, internet auction platforms or other internet platforms, with the processing module performing corresponding processing and, for example, monitoring payment receipts, instigating shipping of ordered and paid goods and updating the ERP system accordingly.

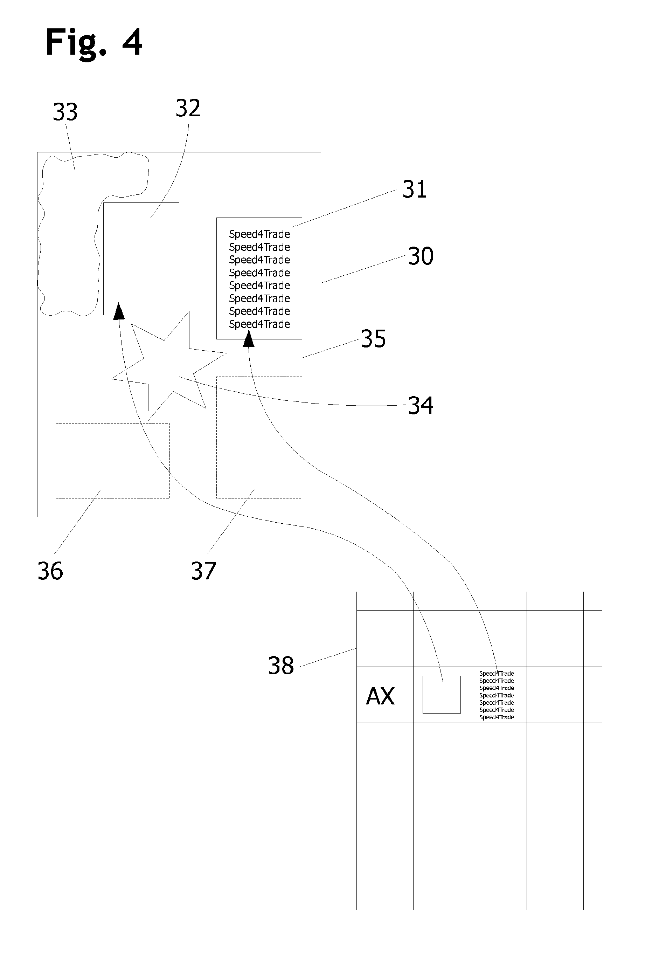

Figure 4 shows how the processing module uses the goods data from the database 38 to create a print template for a printed presentation. The printed presentation shown as an example is a promotional flyer or page 30 of a catalogue. The background colour 35 or the design of the background 35, for example, is preset in accordance with the layout information. In the same way, the layout information can specify design elements, such as a star 34 or a frame element 33. In corresponding place holders 31 for text or 32 for an image, the corresponding image data or text data are retrieved from the database 38 and inserted into place holders 31, 32. Further place holders can be found on page 30, for example in the area indicated by the dotted frames 36 and 37

In accordance with the goods specified for inclusion in the printed goods presentation and with the selected layout, the processing module can automatically determine the scope of the printed goods presentation and the requisite size of each place holder 31, 32, 36, 37.

The present invention thus makes it possible not only to make a direct connection to on-line purchasing platforms, such as online shops, internet auction platforms and the like, with an electronic, digital ERP system in an efficient way, but also to conduct paper-based marketing campaigns, such as the shipping of printed catalogues, brochures, advertising flyers, etc., in a simple way, without the need for additional and laborious data entry. In addition, highly customized, personalized printed goods presentations can thus be created.

Although the present invention has been described in detail using the disclosed embodiments, it is clear to a person skilled in the art that the invention is not restricted to these embodiments, but that modifications and amendments, especially those arising from the exclusion of certain features or other combinations of the presented features are possible, without the scope of protection of the enclosed claims being exceeded. The invention specifically includes any combination of the features presented. Accordingly, the present invention comprises especially the following features:
1. Method for the automated processing of goods data for sales purposes comprising:
   provision of a database of goods data comprising goods information for managing inventory and/or data for describing goods,
   provision of a processing module which prepares the goods data for publication,
   characterised by the fact that
   a database of layout information is made available, such that, on request, the processing module automatically uses the goods data to create a print template for a printed goods presentation.
2. Method in accordance with feature 1,
   characterised by the fact that
   the goods information for managing inventory is taken over from a database of goods information and/or data for describing goods are taken over into the database of goods data or are incorporated into this by reference.
3. Method in accordance with any of the previous features,
   characterised by the fact that
   the database of goods data is a database having a self-contained data structure or comprises several sub-databases.
4. Method in accordance with any of the previous features,
   characterised by the fact that
   an existing database of goods information for managing inventory is used, said database being managed and/or shared by other systems, and/or the data for describing goods,
   which are managed and/or shared by other systems, are used.
5. Method in accordance with any of the previous features,
   characterised by the fact that
   the processing module automatically prepares and/or provides the goods data additionally for the purpose of publication in at least one of the group comprising online shops, internet auction platforms, internet portals and internet sales platforms.
6. Method for the manufacture of printed goods presentations in the form of catalogues, brochures and the like, comprising
   provision of layout information,
   provision of a processing module which, according to the layout information, automatically compiles a print template using the goods for presentation in the printed goods presentation, wherein the processing module retrieves the goods data from a database of goods data for generating online publications.
7. Method in accordance with feature 6,
   characterised by the fact that
   the database of goods data comprises goods information for managing inventory and data for describing goods.
8. Method in accordance with feature 6 or 7,
   characterised by the fact that
   the goods information for managing inventory is taken over from a database of goods information used for managing inventory, and/or the data for describing goods in a database used for internet publications are also taken over into the database of goods data or are incorporated in this by reference.
9. Method in accordance with any of features 6 to 8,
   characterised by the fact that
   the database of goods data is a database having a self-contained data structure or comprises several sub-databases.
10. Method in accordance with any of the previous features,
   characterised by the fact that
   the layout information is stored in a database.
11. Method in accordance with any of the previous features,
   characterised by the fact that
   the database of layout information is integrated into the database of goods data.
12. Method in accordance with any of the previous features,
   characterised by the fact that
   the database of layout information contains data from the group comprising information about text size, text position, image size, image position, font, font colour, background colour, frame layout, page size, number of pages and pagination.
13. Method in accordance with any of the previous features,
   characterised by the fact that
   the processing module, in line with the layout information, provides a layout framework, which is populated with goods data.
14. Method in accordance with any of the previous features,
   characterised by the fact that
   the processing module provides an input unit, with which a selection can be made as to which goods or groups of goods are to be included in the printed goods presentation and/or when and in which cycles the printed goods presentation is automatically created and/or which layout templates are used and/or for which language, country, target audience, customers of an online shop, internet auction platform, internet portal or internet sales platform the printed presentation is made.
15. Method in accordance with feature 14,
   characterised by the fact that
   the processing module groups several goods together to form goods groups on the basis of predetermined criteria.
16. Method in accordance with any of the previous features,
   characterised by the fact that
   the print template is provided as a data file that can be processed by a printing device.
17. Method in accordance with feature 16,
   characterised by the fact that
   the print file is made available as a PDF (portable document format) file.
18. Method in accordance with any of the previous features,
   characterised by the fact that
   the processing module automatically sends the print template to a printing device, such that the printing process starts automatically.
19. Method in accordance with any of the previous features,
   characterised by the fact that
   the print template for each printed goods presentation comprises address information, such that, after the printed goods presentation has been printed, it is shipped in accordance with the address information.
20. Method in accordance with any of the previous features,
   characterised by the fact that
   the print template is created in accordance with predetermined criteria, such that it is customized for each addressee or a group of addressees.
21. Method in accordance with any of the previous features,
   characterised by the fact that
   the print template is sent electronically as a print file to the addressee direct.
22. Method in accordance with any of the previous features,
   characterised by the fact that
   the goods information has data from the group comprising goods numbers, number of goods, storage location, price, weight, dimensions, combinations with other goods and the like.
23. Method in accordance with any of the previous features,
   characterised by the fact that
   the data for describing the goods have data from the group comprising images, descriptions and the like.
24. Method in accordance with any of the previous features,
   characterised by the fact that
   the print template for the printed goods presentation comprises goods information and/or data for describing the goods.
25. Method in accordance with any of the previous features,
   characterised by the fact that
   the processing module is provided as a software product in the form of command sequences for execution on a data-processing system, said sequences being stored in
   binary form or provided via data lines.
26. Device for automated processing of goods data for sales purposes, comprising
   data-processing system with access to a database of goods data comprising goods information for managing inventory and data for describing goods, and a processing module realised by means of software on a data-processing system, said processing module preparing the goods data for publication,
   characterised by the fact that
   a database of layout information is provided, such that the processing module, on request, can automatically create a print template for a printed goods presentation from the goods data.
27. Device in accordance with feature 26,
   characterised by the fact that
   the goods information for managing inventory is taken over from a database of goods information and/or data for describing goods are taken over into the the database of goods data or are incorporated into this by reference.
28. Device in accordance with either of features 26 or 27,
   characterised by the fact that
   the database of goods data is a database having a self-contained data structure or comprises several sub-databases.
29. Device in accordance with any of features 26 to 28,
   characterised by the fact that
   an existing database of goods information for managing inventory is used, which is managed and/or shared by other data-processing systems and/or data-processing programs, and/or the data for describing goods, which are managed and/or shared by other systems, are used.
30. Device in accordance with any of features 26 to 29,
   characterised by the fact that
   the processing module can automatically prepare and/or provide the goods data additionally for the purpose of publication in at least one of the group comprising online shops, internet auction platforms, internet portals and internet sales platforms.
31. Device for the manufacture of printed goods presentations in the form of catalogues,
   brochures and the like, comprising
   a data-processing system having a database of layout information and a processing module realized by means of software on the data-processing system, said processing module being configured such that, in line with the layout information, it can automatically compile a print template of the goods for presentation in the printed goods presentation, with the processing module having an interface which enables it to retrieve goods data from a database of goods data used for generating online publications, from the same or a different data-processing system.
32. Device in accordance with feature 31,
   characterised by the fact that
   the database of goods data comprises goods information for managing inventory and data for describing goods.
33. Device in accordance with feature 31 or 32,
   characterised by the fact that
   the goods information for managing inventory is taken over from a database of goods information used for managing inventory, and/or the data for describing goods in a database used for internet publications are also taken over into the database of goods data or are incorporated in this by reference.
34. Device in accordance with any of features31 to 33,
   characterised by the fact that
   the database of goods data is a database having a self-contained data structure or comprises several sub-databases.
35. Device in accordance with any of features31 to 34,
   characterised by the fact that
   the layout information is stored in a database.
36. Device in accordance with any of features26 to 35,
   characterised by the fact that
   the database of layout information is integrated into the database of goods data.
37. Device in accordance with any of features 26 to 36,
   characterised by the fact that
   the database of layout information contains data from the group comprising information about text size, text position, image size, image position, font, font colour, background
   colour, frame layout, page size, number of pages and pagination.
38. Device in accordance with any of features 26 to 37,
   characterised by the fact that
   the processing module provides an input unit, with which a selection can be made as to which goods or groups of goods are to be included in the printed goods presentation and/or when and in which cycles the printed goods presentation is automatically created and/or which layout templates are used.
39. Device in accordance with feature 38,
   characterised by the fact that
   the processing module can group several goods together to form goods groups on the basis of predetermined criteria.
40. Device in accordance with any of features 26 to 39,
   characterised by the fact that
   the print template is provided as a data file that can be processed by a printing device.
41. Device in accordance with feature 40,
   characterised by the fact that
   the print file is made available as a PDF (portable document format) file.
42. Device in accordance with any of features 26 to 41,
   characterised by the fact that
   the data-processing system has a communications device, such that the processing module can automatically send the print template to a printing device, such that the printing process is started automatically.
43. Device in accordance with any of features 26 to 42,
   characterised by the fact that
   the print template for each printed goods presentation comprises address information, such that, after the printed goods presentation has been printed, it can be shipped in accordance with the address information.
44. Device in accordance with any of features 26 to 43,
   characterised by the fact that
   the goods information has data from the group comprising goods numbers, number of goods, storage location, price, weight, dimensions, combinations with other goods and the
   like.
45. Device in accordance with any of features 26 to 44,
   characterised by the fact that
   the data for describing the goods have data from the group comprising images, descriptions and the like.
46. Device in accordance with any of features 26 to 45,
   characterised by the fact that
   the print template for the printed goods presentation comprises goods information and/or data for describing the goods.
47.Database for managing inventory having a plurality of data on a multiplicity of different goods, wherein the database data comprise goods information for managing inventory and data for describing products,
   characterised by the fact that
   the database furthermore comprises layout information for a print template for a printed goods presentation of the goods.
48. Database in accordance with feature 47,
   characterised by the fact that
   the goods information has data from the group comprising goods numbers, number of goods, storage location, price, weight, dimensions, combinations with other goods and the like.
49. Database in accordance with either of features 47 or 48,
   characterised by the fact that
   the data for describing the goods have data from the group comprising images, descriptions and the like.
50. Software product for automated processing of goods data for sales purposes for the purpose of implementing the method in accordance with any of features 1 to 5 and 10 to 25.
51.Software product for the manufacture of printed goods presentations in the form of catalogues, brochures and the like by a method in accordance with any of claims 6 to 25.

## Claims

1. Method for the automated processing of goods data for sales purposes comprising:
provision of a database of goods data comprising goods information for managing inventory and/or data for describing goods,
provision of a processing module which prepares the goods data for publication,
**characterised by the fact that**
a database of layout information is made available, such that, on request, the processing module automatically uses the goods data to create a print template for a printed goods presentation.

2. Method in accordance with any of claim 1,
**characterised by the fact that**
the processing module automatically prepares and/or provides the goods data additionally for the purpose of publication in at least one of the group comprising online shops, internet auction platforms, internet portals and internet sales platforms.

3. Method for the manufacture of printed goods presentations in the form of catalogues, brochures and the like, comprising
provision of layout information,
provision of a processing module which, according to the layout information, automatically compiles a print template using the goods for presentation in the printed goods presentation, wherein the processing module retrieves the goods data from a database of goods data for generating online publications.

4. Method in accordance with any of the previous claims,
**characterised by the fact that**
the layout information is stored in a database.

5. Method in accordance with any of the previous claims,
**characterised by the fact that**
the database of layout information is integrated into the database of goods data.

6. Method in accordance with any of the previous claims,
**characterised by the fact that**
the processing module, in line with the layout information, provides a layout framework, which is populated with goods data.

7. Method in accordance with any of the previous claims,
**characterised by the fact that**
the processing module provides an input unit, with which a selection can be made as to which goods or groups of goods are to be included in the printed goods presentation and/or when and in which cycles the printed goods presentation is automatically created and/or which layout templates are used and/or for which language, country, target audience, customers of an online shop, internet auction platform, internet portal or internet sales platform the printed presentation is made.

8. Method in accordance with any of the previous claims,
**characterised by the fact that**
the print template is provided as a data file that can be processed by a printing device.

9. Method in accordance with any of the previous claims,
**characterised by the fact that**
the processing module automatically sends the print template to a printing device, such that the printing process starts automatically.

10. Method in accordance with any of the previous claims,
**characterised by the fact that**
the processing module is provided as a software product in the form of command sequences for execution on a data-processing system, said sequences being stored in binary form or provided via data lines.

11. Device for automated processing of goods data for sales purposes, comprising
data-processing system with access to a database of goods data comprising goods information for managing inventory and data for describing goods, and a processing module realised by means of software on a data-processing system, said processing module preparing the goods data for publication,
**characterised by the fact that**
a database of layout information is provided, such that the processing module, on request, can automatically create a print template for a printed goods presentation from the goods data.

12. Device for the manufacture of printed goods presentations in the form of catalogues, brochures and the like, comprising
a data-processing system having a database of layout information and a processing module realized by means of software on the data-processing system, said processing module being configured such that, in line with the layout information, it can automatically compile a print template of the goods for presentation in the printed goods presentation, with the processing module having an interface which enables it to retrieve goods data from a database of goods data used for generating online publications, from the same or a different data-processing system.

13. Database for managing inventory having a plurality of data on a multiplicity of different goods, wherein the database data comprise goods information for managing inventory and data for describing products,
**characterised by the fact that**
the database furthermore comprises layout information for a print template for a printed goods presentation of the goods.

14. Software product for automated processing of goods data for sales purposes for the purpose of implementing the method in accordance with any of claims 1, 2 and 4 to 10.

15. Software product for the manufacture of printed goods presentations in the form of catalogues, brochures and the like by a method in accordance with any of claims 4 to 10.
